# EUROPÄISCHE PATENTANMELDUNG

(11) **EP 2 523 058 A1**
(43) Veröffentlichungstag der Anmeldung: **14.11.2012**
(21) Anmeldenummer: 11165461.2
(22) Anmeldetag: 10.05.2011
(51) Int. Cl.: G05B 19/418

(54) **Authentifizierungsverfahren für ein Automatisierungssystem**

(71) Anmelder: SIEMENS AKTIENGESELLSCHAFT, 80333 München (DE)
(72) Erfinder: Plonka, Reiner, 90768 Fürth (DE); Arnold, Johann, 90530 Wendelstein (DE)

(57) **Zusammenfassung**

Die Erfindung betrifft ein Authentifizierungsverfahren für ein Automatisierungssystem (1) mit wenigstens einem Automatisierungsgerät (2, 3), das eine Zugriffschnittstelle (5, 7, 8) aufweist, über die auf das Automatisierungssystem (1) zugegriffen werden kann. Die Zugriffe auf das Automatisierungssystem (1) werden kontrolliert, indem bei einem Zugriffsversuch über eine Zugriffschnittstelle (5, 7, 8) eine Authentisierung des Zugriffs verlangt und geprüft wird und in Abhängigkeit von einem Überprüfungsergebnis ein Zugriffsrecht für den Zugriff gewährt oder verwehrt wird. Ferner betrifft die Erfindung ein entsprechend ausgebildetes Automatisierungssystem (1).

## Beschreibung

Die Erfindung betrifft ein Automatisierungssystem mit wenigstens einem Automatisierungsgerät, das eine Zugriffschnittstelle aufweist, über die auf das Automatisierungssystem zugegriffen werden kann, und ein Verfahren zum Schutz eines derartigen Automatisierungssystems gegen unberechtigte Zugriffe.

Heutige Automatisierungsgeräte werden in ihrer Kommunikationsfähigkeit immer leistungsfähiger und es werden immer mehr Schnittstellen auf einer Central Processing Unit (CPU) oder einem zugehörigen Communication Processor (CP) eines Automatisierungsgerätes integriert. Besonders ausgeprägt ist dies beispielsweise bei Produkten mit PROFINET-Funktionalität (PROFINET = Process Field Network). PROFINET-Geräte haben häufig zwei oder mehr modulare Ethernet-Schnittstellen (Ethernet-Ports). Diese Schnittstellen können jeweils für eine verschiedene Automatisierungsanwendung belegt werden.

Häufig nutzt ein Automatisierungssystem nicht alle zur Verfügung stehenden Schnittstellen. An unbelegten Ethernet-Schnittstellen kann sich ein externer Benutzer problemlos anschließen. Typischerweise werden Programmiergeräte, z. B. ein PC mit einer automatisierungsgeräteabhängigen Programmier- bzw. Parametriersoftware, angeschlossen. Mit der Programmier- bzw. der Parametrierungssoftware kann die Funktion einer Automatisierungsanlage wesentlich beeinflusst werden. Es können CPU-Programme, Baugruppenparameter oder sogar der Betriebszustand einzelner Baugruppen geändert werden. Dies kann dazu führen, dass das Automatisierungssystem in seiner Funktion beeinträchtigt wird oder Automatisierungsaufgaben überhaupt nicht mehr durchgeführt werden können. Selbst wenn alle Ports vollständig belegt sind, kann, falls ein Automatisierungsgerät nicht physisch gesichert ist, ein

Benutzer einen belegten Anschluss benutzen und sich mit einem Programmiergerät an ein Automatisierungsgerät anschließen und danach die oben geschilderten Manipulationen vornehmen.

Ein Automatisierungsgerät kann neben Ethernet-Schnittstellen auch andere Schnittstellen aufweisen. Dies können Schnittstellen zu Feldbussen, wie z. B. zu einem PROFIBUS (= Process Field Bus), einfache Punkt-zu-Punkt-Schnittstellen, z. B. RS232-Schnittstellen, parallele Schnittstellen, z. B. Schnittstellen gemäß dem Standard IEEE 1284, oder USB-Schnittstellen sein. Alle diese Schnittstellen stellen ein Sicherheitsrisiko dar, falls der Zugang zu ihnen nicht durch physische Maßnahmen verhindert wird.

Die US 2004/0107345 A1 offenbart ein System und ein Verfahren zur Vereinfachung eines Betriebsschutzes von Netzwerk- oder Automatisierungsgeräten in einer netzwerkbasierten industriellen Automatisierungsumgebung. Dazu wird vorgeschlagen, Netzwerkprotokolle für Automatisierungszwecke mit Sicherheitsfunktionen zur Authentifizierung von Datenanfragen oder Datenänderungen auszustatten.

Der Erfindung liegt die Aufgabe zugrunde, ein verbessertes Verfahren zum Schutz eines Automatisierungssystems vor unberechtigten Zugriffen anzugeben. Ferner liegt der Erfindung die Aufgabe zugrunde, ein Automatisierungssystem anzugeben, mittels dessen ein derartiges Verfahren durchführbar ist.

Die Aufgabe wird erfindungsgemäß hinsichtlich des Verfahrens durch ein Authentifizierungsverfahren mit den Merkmalen des Anspruchs 1 und hinsichtlich des Automatisierungssystems durch die Merkmale der Ansprüche 10 oder 11 gelöst.

Vorteilhafte Ausgestaltungen der Erfindung sind Gegenstand der Unteransprüche.

Ein erfindungsgemäßes Authentifizierungsverfahren ist konzipiert für ein Automatisierungssystem mit wenigstens einem Automatisierungsgerät, das eine Zugriffschnittstelle aufweist, über die auf das Automatisierungssystem zugegriffen werden kann. Dabei werden Zugriffe auf das Automatisierungssystem kontrolliert, indem bei einem Zugriffsversuch über eine Zugriffschnittstelle eine Authentisierung des Zugriffs verlangt und geprüft wird und in Abhängigkeit von einem Überprüfungsergebnis ein Zugriffsrecht für den Zugriff gewährt oder verwehrt wird.

Zu Automatisierungsgeräten mit Zugriffschnittstellen werden dabei auch Feldbusse mit Ports gezählt, über die auf ein Automatisierungssystem zugegriffen werden kann.

Das Authentifizierungsverfahren ermöglicht es, durch eine Zugangskontrolle unberechtigte Zugriffe auf das Automatisierungssystem zu verhindern. Dadurch wird vorteilhaft ein Sicherheitsrisiko durch unberechtigte Zugriffe auf das Automatisierungssystem reduziert. Über das Zugriffsrecht können dabei vorteilhaft Art und Umfang eines Zugriffs anwendungs-, benutzer- und schnittstellenspezifisch angepasst und beschränkt werden.

In einer bevorzugten Ausgestaltung des Authentifizierungsverfahrens wird jede erhaltene Authentisierung an eine zentrale Authentifizierungseinheit des Automatisierungssystems gesendet und von dieser geprüft. Das Überprüfungsergebnis wird von der zentralen Authentifizierungseinheit an dasjenige Automatisierungsgerät gesendet, das die Zugriffschnittstelle aufweist, über die der jeweilige Zugriffsversuch erfolgte.

Die Prüfung der Authentisierungen in einer zentralen Authentifizierungseinheit ermöglicht eine zentrale Kontrolle der einzelnen Zugriffschnittstellen. Dies entlastet die einzelnen Automatisierungsgeräte und entbindet sie von eigenen Authentifizierungsaufgaben. Außerdem ermöglicht es eine zentrale Überwachung und Analyse der Zugriffsversuche. Unter anderem können so systematische Angriffe auf das Automatisierungssystem über unterschiedliche Zugriffschnittstellen leichter entdeckt werden.

In einer alternativen Ausgestaltung wird jede erhaltene Authentisierung von einer Funktionseinheit desjenigen Automatisierungsgerätes geprüft, das die Zugriffschnittstelle aufweist, über die der jeweilige Zugriffsversuch erfolgte. Eine zur Durchführung der Authentifizierung geeignete Funktionseinheit ist z.B. eine CPU oder ein Kommunikationsprozessor oder eine andere Baugruppe eines Automatisierungsgerätes.

Diese Alternative wird in Fällen bevorzugt, in denen eine zentrale Authentifizierung nicht oder nur unter unverhältnismäßigem Aufwand realisiert werden kann.

Für die Authentisierung eines Zugriffs auf das Automatisierungssystem über eine Zugriffschnittstelle werden vorzugsweise ein digitales Zertifikat oder ein Passwort oder eine Geräteidentifizierung, beispielsweise ein Gerätename oder eine Seriennummer, oder ein Zugriffsziel verlangt. Insbesondere kann auch eine Kombination derartiger Authentisierungsnachweise verlangt werden. Besonders bevorzugt wird die Art der erforderlichen Authentisierung in Abhängigkeit von einer Sicherheitsanforderung an die jeweilige Zugriffschnittstelle festgelegt, beispielsweise wird bei hohen Sicherheitsanforderungen ein Zertifikat verlangt, bei mittleren Sicherheitsanforderungen ein Passwort und bei niedrigen Sicherheitsanforderungen eine Geräteidentifizierung. Auf diese Weise können besonders sicherheitsrelevante Zugriffschnittstellen besonders geschützt werden und es kann ein unnötig hoher Aufwand für die Authentifizierung an weniger kritischen Zugriffschnittstellen vermieden werden. Durch eine Übermittelung eines Zugriffsziels mit der Authentisierung kann ein Zugriffsrecht vorteilhaft dem Zugriffsziel angepasst werden.

Ferner wird ein Zugriffsrecht vorzugsweise hinsichtlich seiner Art oder seines Umfangs in Abhängigkeit von der jeweiligen Authentisierung, der jeweiligen Zugriffschnittstelle, dem jeweiligen Automatisierungsgerät oder/und einem Betriebszustand des Automatisierungssystems gewährt. Dadurch können die Zugriffsrechte vorteilhaft benutzer-, geräte- und/oder situationsabhängig differenziert und beschränkt werden, so dass beispielsweise besonders systemkritische Zugriffe nur privilegierten Benutzern und/oder bestimmten Geräten gestattet werden.

Die Zugriffe auf das Automatisierungssystem werden anhand der Zugriffsrechte über die Zugriffschnittstellen von Prozessoreinheiten der jeweiligen Automatisierungsgeräte oder von einer zentralen Steuereinheit des Automatisierungssystems gesteuert. Eine derartige Steuerung ermöglicht vorteilhaft die Vermeidung von Konflikten von Zugriffen und von Beeinträchtigungen der Funktionssicherheit des Automatisierungssystems durch die Zugriffe. Ob diese Zugriffssteuerung vorzugsweise dezentral von den einzelnen Automatisierungsgeräten oder zentral von einer Steuereinheit vorgenommen wird, hängt dabei von den spezifischen Eigenschaften des Automatisierungssystems ab.

Ein erfindungsgemäßes Automatisierungssystem weist dementsprechend wenigstens ein Automatisierungsgerät mit einer Zugriffschnittstelle auf, über die auf das Automatisierungssystem zugegriffen werden kann. Das wenigstens eine Automatisierungsgerät ist dazu ausgebildet, einen Zugriffsversuch auf das Automatisierungssystem über die Zugriffschnittstelle zu erkennen, bei einem erkannten Zugriffsversuch eine Authentisierung für den Zugriff zu verlangen und ein Zugriffsrecht für den Zugriff zu gewähren oder zu verwehren. Zur Überprüfung der Authentisierung ist das Automatisierungssystem entweder mit einer zentralen Authentifizierungseinheit ausgestattet oder die einzelnen Automatisierungsgeräte sind dazu ausgebildet, die Überprüfung für Zugriffe über eine ihrer Zugriffschnittstellen jeweils selbständig vorzunehmen. Auf diese Weise kann das erfindungsgemäße Authentifizierungsverfahren mittels einer zentralen Authentifizierungseinheit oder den einzelnen Automatisierungsgeräten realisiert werden.

Vorzugsweise sind die Zugriffschnittstellen dazu ausgebildet, bei einem über sie erfolgenden Zugriffsversuch eine Benachrichtigung an eine Prozessoreinheit des zugehörigen Automatisierungsgeräts zu senden und dadurch eine Authentisierung für den Zugriff einzuleiten. Auf diese Weise kann vorteilhaft ein Zugriffsversuch erkannt und daraufhin das Authentifizierungsverfahren veranlasst werden.

Die Zugriffe auf das Automatisierungssystem über die Zugriffschnittstellen sind vorzugsweise entweder von Prozessoreinheiten der jeweiligen Automatisierungsgeräte oder von einer zentralen Steuereinheit des Automatisierungssystems anhand der Zugriffsrechte für die Zugriffe steuerbar. Dadurch kann die oben bereits erwähnte vorteilhafte Vermeidung von Konflikten, von Zugriffen und von Beeinträchtigungen der Funktionssicherheit des Automatisierungssystems durch Zugriffe über Zugriffschnittstellen umgesetzt werden.

Vorzugsweise ist ferner wenigstens eine Zugriffschnittstelle eine Ethernetschnittstelle. Ethernetschnittstellen eignen sich aufgrund ihrer Flexibilität besonders vorteilhaft als Zugriffschnittstellen für Automatisierungssysteme.

Insbesondere können mit ihnen in einfacher Weise modulare und damit vielseitig nutzbare Zugriffschnittstellen realisiert werden. Außerdem verwenden heutige Automatisierungssysteme vorwiegend Ethernet zum Datenaustausch, so dass sich Ethernetschnittstellen besonders gut als Zugriffschnittstellen für solche Automatisierungssysteme eignen.

Vorzugsweise ist wenigstens ein Automatisierungsgerät modular aus über einen Rückwandbus verbundenen Komponenten aufgebaut. Der modulare Aufbau von Automatisierungsgeräten erhöht vorteilhaft die Flexibilität und Erweiterbarkeit des Automatisierungssystems und senkt dessen Kosten.

Dabei ist wenigstens eine Komponente vorzugsweise eine Prozessoreinheit, die eine Zugriffschnittstelle aufweist. Auf diese Weise kann über eine Prozessoreinheit auf das Automatisierungssystem zugegriffen werden. Dies erleichtert die Zugriffskontrolle, da diejenige Prozessoreinheit, über die zugegriffen wird, die Zugriffskontrolle selbst steuern kann, ohne Geräte oder Komponenten einbeziehen zu müssen, die sie mit der Zugriffschnittstelle verbinden. Dadurch werden die Geschwindigkeit und Ausfallsicherheit der Zugriffskontrolle vorteilhaft erhöht.

Insbesondere ist die Prozessoreinheit dabei vorzugsweise ein Kommunikationsprozessor. Unter einem Kommunikationsprozessor wird eine Prozessoreinheit verstanden, die die Kommunikation des Automatisierungsgerätes mit einem Netzwerk steuert. Kommunikationsprozessoren mit Zugriffschnittstellen eignen sich infolge ihrer Funktionalität besonders vorteilhaft dazu, externe Zugriffe auf das Automatisierungssystem bereit zu stellen und zu kontrollieren.

Besonders bevorzugt ist das Automatisierungsgerät dabei eine modulare speicherprogrammierbare Steuerung oder Teil einer derartigen speicherprogrammierbaren Steuerung, wobei die Komponenten Baugruppen der speicherprogrammierbaren Steuerung sind. Modulare speicherprogrammierbare Steuerungen ermöglichen eine besonders flexible und kostengünstige Ausbildung von Automatisierungsgeräten.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch und ausschnittsweise ein Automatisierungssystem mit Automatisierungsgeräten, die Zugriffschnittstellen aufweisen, und externe Teilnehmer, die über Zugriffschnittstellen auf das Automatisierungssystem zugreifen, und
- FIG 2: schematisch und ausschnittsweise das in FIG 1 gezeigte Automatisierungssystem und einen Datenverkehr zwischen einer zentralen Authentifizierungseinheit und einem Automatisierungsgerät bei einem Zugriffsversuch auf eine Zugriffschnittstelle.

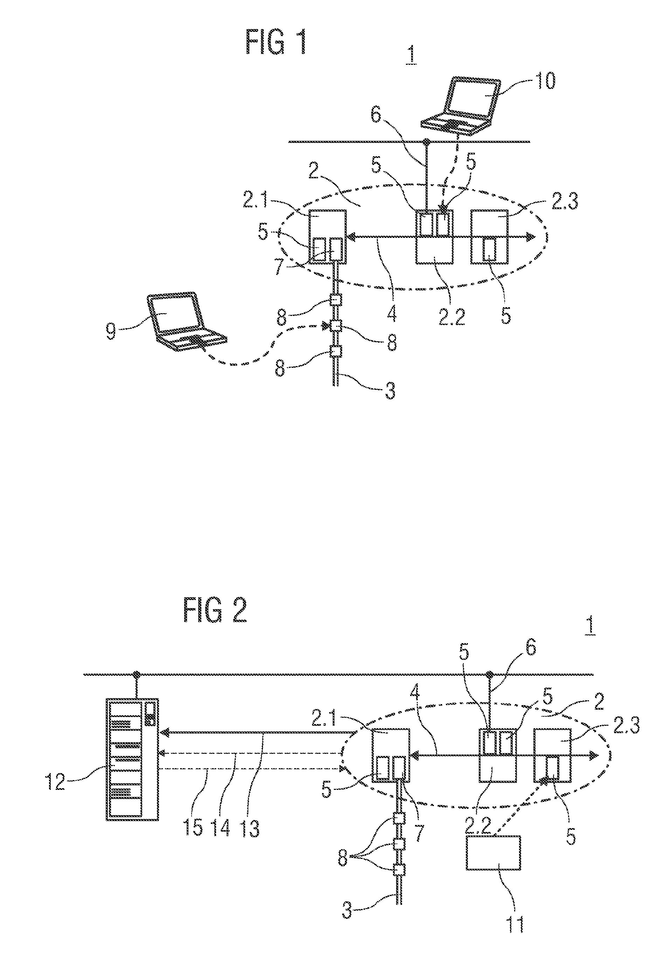

Figur 1 zeigt schematisch und ausschnittsweise ein Automatisierungssystem 1 mit Automatisierungsgeräten 2, 3 die miteinander vernetzt sind.

Beispielhaft ist ein erstes Automatisierungsgerät 2 dargestellt, das mehrere Komponenten 2.1, 2.2, 2.3 aufweist. Dabei ist eine erste Komponente 2.1 eine CPU, eine zweite Komponente 2.2 ein Kommunikationsmodul und die dritte Komponente 2.3 ein Kommunikationsprozessor. Die Komponenten 2.1, 2.2, 2.3 sind miteinander über einen Rückwandbus 4 verbunden. In einem besonders bevorzugten Ausführungsbeispiel ist das erste Automatisierungsgerät 2 als eine speicherprogrammierbare Steuerung ausgebildet und die Komponenten 2.1, 2.2, 2.3 sind Baugruppen der speicherprogrammierbaren Steuerung, die beispielsweise als Steckmodule ausgeführt sind.

Das erste Automatisierungsgerät 2 weist mehrere als Ethernetschnittstellen 5 ausgebildete Zugriffschnittstellen auf, über die auf das Automatisierungssystem 1 zugegriffen werden kann. Dabei weisen die erste Komponente 2.1 und die dritte Komponente 2.3 jeweils eine Ethernetschnittstelle 5 auf und die zweite Komponente 2.2 weist zwei Ethernetschnittstellen 5 auf. Eine Ethernetschnittstelle 5 der zweiten Komponente 2.2 ist über ein Ethernetkabel 6 mit einem PROFINET des Automatisierungssystems 1 verbunden. Die anderen Ethernetschnittstellen 5 des ersten Automatisierungsgerätes 2 sind unbelegt. Die erste Komponente 2.1 weist außerdem eine als PROFIBUS-Schnittstelle 7 ausgebildete Zugriffschnittstelle auf.

Das zweite Automatisierungsgerät 3 ist ein PROFIBUS mit mehreren als PROFIBUS-Ports 8 ausgebildeten unbelegten Zugriffschnittstellen. Das erste Automatisierungsgerät 2 ist über die PROFIBUS-Schnittstelle 7 seiner ersten Komponente 2.1 mit dem PROFIBUS verbunden.

Figur 1 zeigt außerdem zwei externe Teilnehmer 9, 10, die jeweils über eine Zugriffschnittstelle auf das Automatisierungssystem 1 zugreifen. Dabei greift ein erster externer Teilnehmer 9 über einen PROFIBUS-Port 8 auf das Automatisierungssystem 1 zu, und der zweite externe Teilnehmer 10 greift über die unbelegte Ethernetschnittstelle 5 der zweiten Komponente 2.2 des ersten Automatisierungsgerätes 2 auf das Automatisierungssystem 1 zu.

Zugriffe auf das Automatisierungssystem 1 über Zugriffschnittstellen werden durch ein erfindungsgemäßes Authentifizierungsverfahren kontrolliert, um unberechtigte Zugriffe zu verhindern. Dazu weist das Automatisierungssystem 1 in diesem Ausführungsbeispiel eine zentrale Authentifizierungseinheit 12 (s. Figur 2) auf, die als ein AAA-Server (= Authentification, Authorization and Accounting Server) ausgebildet und an das PROFINET des Automatisierungssystems 1 angeschlossen ist. Die Zugriffschnittstellen werden mit einer portbasierten Zugangskontrolle ausgestattet, vorzugsweise einer Zugangskontrolle gemäß dem Standard IEEE802.1X.

Figur 2 verdeutlicht das Authentifizierungsverfahren schematisch am Beispiel eines dritten externen Teilnehmers 11, der über die Ethernetschnittstelle 5 der dritten Komponente 2.3 des ersten Automatisierungsgerätes 2 auf das Automatisierungssystem 1 zuzugreifen versucht.

Der Zugriffsversuch wird von der ersten Komponente 2.1, d. h. an der CPU des ersten Automatisierungsgerätes 2 erkannt. Die CPU bearbeitet daraufhin die Authentisierung des dritten externen Teilnehmers 11.

Die CPU leitet die Authentisierung nach deren Erhalt an die zentrale Authentifizierungseinheit 12 weiter. Die zentrale Authentifizierungseinheit 12 überprüft die empfangene Authentisierung und sendet das Überprüfungsergebnis an das erste Automatisierungsgerät 2. Das Überprüfungsergebnis enthält ein Zugriffsrecht, das Art und Umfang eines Zugriffs des dritten externen Teilnehmers 11 auf das erste Automatisierungsgerät 2 über die betreffende Ethernetschnittstelle 5 festlegt und insbesondere einen Zugriff verbieten kann.

Dem dritten Teilnehmer 11 wird daraufhin von dem ersten Automatisierungsgerät 2 der Zugriff gemäß dem Zugriffsrecht gewährt oder verwehrt.

Zur Kommunikation des ersten Automatisierungsgerätes 2 mit der zentralen Authentifizierungseinheit 12 wird dabei ein Sicherheitsprotokoll 13 zur Kontrolle der Zugriffsberechtigung verwendet, beispielsweise ein RADIUS-Protokoll (RADIUS = Remote Authentification Dial-in User), TACACS-Protokoll (TACACS = Terminal Access Controller Access Control System) oder DIAMETER-Protokoll. Die Authentisierung wird dabei von dem ersten Automatisierungsgerät 2 in Form einer protokollkonformen Zugriffsanfrage 14 (Access Request) an die zentrale Authentifizierungseinheit 12 gesendet. Das Überprüfungsergebnis wird als protokollkonforme Antwort 15 (Response) von der zentralen Authentifizierungseinheit 12 an das erste Automatisierungsgerät 2 gesendet.

In einer Ausgestaltung dieses Ausführungsbeispiels wird jeder Zugriffschnittstelle ein Sicherheitsanforderungswert zugeordnet, über den eine Sicherheitsanforderung für die jeweilige Zugriffschnittstelle und die Art der erforderlichen Authentisierung festgelegt wird. Beispielsweise kann die Prüfung der Authentizität bei hohen Sicherheitsanforderungen mit Hilfe digitaler Zertifikate erfolgen. Bei mittleren Sicherheitsanforderungen können Passwörter verwendet werden. Bei niedrigen Sicherheitsanforderungen kann ein Zugriff aufgrund einer reinen Geräteidentifizierung gewährt werden. Ein Gerät kann sich dabei z. B. durch seinen Gerätenamen und/oder durch seine Seriennummer identifizieren.

In einer zusätzlichen oder alternativen Ausgestaltung des Ausführungsbeispiels kann mit der Authentisierung auch ein Zugriffsziel angefordert und Art und Umfang des Zugriffsrechts dem Zugriffsziel angepasst werden. Zugriffsziele können beispielsweise sein:
● eine Diagnose, z. B. ein Auslesen von Betriebszuständen oder eines Diagnosepuffers,
● ein Umschalten der Betriebsart,
● ein Laden eines Anwenderprogramms oder Teilen von diesen, eine Umparametrisierung von Anwenderbausteinen oder ein Lesen von Parametern,
● eine Auswertung automatisierungsspezifischer Adressierungen (z. B. einer S7-Adresse),
● ein Testbetrieb oder eine Inbetriebnahme (z. B. ein Setzen von Haltepunkten oder ein Einzelschrittbetrieb),
● Bedienaktionen.

Ferner können die Zugriffsrechte auch einen Betriebszustand des Automatisierungssystems 1 berücksichtigen. Beispielsweise werden Testfunktionen nur dann zugelassen, wenn das Automatisierungssystem 1 nicht im Produktivbetrieb ist. Weiterhin können die Zugriffsrechte mit Zeitbeschränkungen verknüpft werden. Beispielsweise werden bestimmte Bedienaktionen nur an Werktagen zugelassen.

Auch wenn die Zugangskontrolle nicht gemäß dem Standard IEEE802.1X durchgeführt werden kann, wird sie vorzugsweise an diesem Standard orientiert. In jedem Fall erfordert die Authentisierung die Mitwirkung eines Gerätes bzw. eines Kommunikationsdienstes, mit dem auf ein Automatisierungsgerät 2, 3 zugegriffen wird. Wenn Kommunikationsverfahren verwendet werden, die bereits über eine Authentisierung angeschlossener Geräte verfügen, werden diese Authentisierungsverfahren im Automatisierungsgerät 2 ,3 vorzugsweise so geändert bzw. erweitert, dass eine Authentifizierung zusätzlich in einer zentralen Authentifizierungseinheit 12 erfolgen kann.

Stellt ein verwendetes Kommunikationsverfahren per se keine Authentisierungsmöglichkeit bereit, so gibt es vor allem zwei Alternativen. Entweder wird das Kommunikationsverfahren um ein geeignetes Authentisierungsverfahren erweitert, beispielsweise um das Authentisierungsprotokoll EAP (= Extensible Authentication Protocol) gemäß RFC 3748 (RFC = Request for Comments). Andernfalls, insbesondere wenn das Kommunikationsverfahren nicht erweitert werden kann, wird die Authentifizierung in eine zentrale Authentifizierungseinheit 12 des Automatisierungssystems 1, beispielsweise einen zentralen Server oder auch einen zentralen Busarbiter, verlagert oder von den einzelnen Automatisierungsgeräten 2, 3 selbst vorgenommen.

Obwohl die Erfindung im Detail durch ein bevorzugtes Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Authentifizierungsverfahren für ein Automatisierungssystem (1) mit wenigstens einem Automatisierungsgerät (2, 3), das eine Zugriffschnittstelle (5, 7, 8) aufweist, über die auf das Automatisierungssystem (1) zugegriffen werden kann, wobei Zugriffe auf das Automatisierungssystem (1) kontrolliert werden, indem bei einem Zugriffsversuch über eine Zugriffschnittstelle (5, 7, 8) eine Authentisierung des Zugriffs verlangt und geprüft wird und in Abhängigkeit von einem Überprüfungsergebnis ein Zugriffsrecht für den Zugriff gewährt oder verwehrt wird.

2. Authentifizierungsverfahren nach Anspruch 1,
**dadurch gekennzeichnet, dass** jede erhaltene Authentisierung an eine zentrale Authentifizierungseinheit (12) des Automatisierungssystems (1) gesendet und von dieser geprüft wird und das Überprüfungsergebnis von der zentralen Authentifizierungseinheit (12) an dasjenige Automatisierungsgerät (2, 3) gesendet wird, das die Zugriffschnittstelle (5, 7, 8) aufweist, über die der jeweilige Zugriffsversuch erfolgte.

3. Authentifizierungsverfahren nach Anspruch 1,
**dadurch gekennzeichnet, dass** jede erhaltene Authentisierung von einer Funktionseinheit desjenigen Automatisierungsgeräts (2, 3) geprüft wird, das die Zugriffschnittstelle (5, 7, 8) aufweist, über die der jeweilige Zugriffsversuch erfolgte.

4. Authentifizierungsverfahren nach einem der vorhergehenden Ansprüche,
**dadurch gekennzeichnet, dass** für die Authentisierung eines Zugriffs auf das Automatisierungssystem (1) über eine Zugriffschnittstelle (5, 7, 8) ein digitales Zertifikat oder ein Passwort oder eine Geräteidentifizierung oder ein Zugriffsziel verlangt werden.

5. Authentifizierungsverfahren nach Anspruch 4,
**dadurch gekennzeichnet, dass** als Geräteidentifizierung ein Gerätename oder eine Seriennummer verlangt werden.

6. Authentifizierungsverfahren nach einem der vorhergehenden Ansprüche,
**dadurch gekennzeichnet, dass** jeder Zugriffschnittstelle (5, 7, 8) ein Sicherheitsanforderungswert zugeordnet wird und für eine Zugriffschnittstelle (5, 7, 8) die Art der erforderlichen Authentisierung in Abhängigkeit von ihrem Sicherheitsanforderungswert festgelegt wird.

7. Authentifizierungsverfahren nach einem der vorhergehenden Ansprüche,
**dadurch gekennzeichnet, dass** ein Zugriffsrecht hinsichtlich seiner Art oder seines Umfangs in Abhängigkeit von der jeweiligen Authentisierung oder der jeweiligen Zugriffschnittstelle (5, 7, 8) oder dem jeweiligen Automatisierungsgerät (2, 3) oder einem Betriebszustand des Automatisierungssystems (1) gewährt wird.

8. Authentifizierungsverfahren nach einem der vorhergehenden Ansprüche,
**dadurch gekennzeichnet, dass** die Zugriffe auf das Automatisierungssystem (1) über die Zugriffschnittstellen (5, 7, 8) von Prozessoreinheiten (2.1, 2.3) der jeweiligen Automatisierungsgeräte (2, 3) anhand der Zugriffsrechte für die Zugriffe gesteuert werden.

9. Authentifizierungsverfahren nach einem der Ansprüche 1 bis 7,
**dadurch gekennzeichnet, dass** die Zugriffe auf das Automatisierungssystem (1) über die Zugriffschnittstellen (5, 7, 8) von einer zentralen Steuereinheit des Automatisierungssystems (1) anhand der Zugriffsrechte für die Zugriffe gesteuert werden.

10. Automatisierungssystem (1) mit wenigstens einem Automatisierungsgerät (2, 3), das eine Zugriffschnittstelle (5, 7, 8) aufweist, über die auf das Automatisierungssystem (1) zugegriffen werden kann, wobei das wenigstens eine Automatisierungsgerät (2, 3) dazu ausgebildet ist, einen Zugriffsversuch auf das Automatisierungssystem (1) über die Zugriffschnittstelle (5, 7, 8) zu erkennen, bei einem erkannten Zugriffsversuch eine Authentisierung für den Zugriff zu verlangen und zu überprüfen und in Abhängigkeit von einem Überprüfungsergebnis ein Zugriffsrecht für den Zugriff zu gewähren oder zu verwehren.

11. Automatisierungssystem (1) mit Automatisierungsgeräten (2, 3), die jeweils wenigstens eine Zugriffschnittstelle (5, 7, 8) aufweisen, über die auf das Automatisierungssystem (1) zugegriffen werden kann, und mit einer zentralen Authentifizierungseinheit (12), die mit den Automatisierungsgeräten (2, 3) zum Nachrichtenaustausch verbunden ist, wobei jedes Automatisierungsgerät (2, 3) dazu ausgebildet ist, einen Zugriffsversuch auf das Automatisierungssystem (1) über eine seiner Zugriffschnittstellen (5, 7, 8) zu erkennen und bei einem erkannten Zugriffsversuch eine Authentisierung für den Zugriff abzufragen und an die zentrale Authentifizierungseinheit (12) zu senden, die zentrale Authentifizierungseinheit (12) dazu ausgebildet ist, eine von ihr empfangene Authentisierung zu überprüfen und ein Überprüfungsergebnis an dasjenige Automatisierungsgerät (2, 3) zu senden, von dem ihr die Authentisierung zugesendet wurde, und jedes Automatisierungsgerät (2, 3) dazu ausgebildet ist, in Abhängigkeit von einem Überprüfungsergebnis den Zugriff zu gewähren oder zu verwehren.

12. Automatisierungssystem (1) nach Anspruch 10 oder 11, **dadurch gekennzeichnet, dass** wenigstens eine Zugriffschnittstelle (5, 7, 8) dazu ausgebildet ist, bei einem über sie erfolgenden Zugriffsversuch eine Benachrichtigung an eine Prozessoreinheit des zugehörigen Automatisierungsgeräts (2, 3) zu senden und dadurch eine Authentisierung für den Zugriff einzuleiten.

13. Automatisierungssystem (1) nach einem der Ansprüche 10 bis 12,
**dadurch gekennzeichnet, dass** die Zugriffe auf das Automatisierungssystem (1) über die Zugriffschnittstellen (5, 7, 8) von Prozessoreinheiten der jeweiligen Automatisierungsgeräte (2, 3) anhand der Zugriffsrechte für die Zugriffe steuerbar sind.

14. Automatisierungssystem (1) nach einem der Ansprüche 10 bis 12,
**dadurch gekennzeichnet, dass** die Zugriffe auf das Automatisierungssystem (1) über die Zugriffschnittstellen (5, 7, 8) von einer zentralen Steuereinheit des Automatisierungssystems (1) anhand der Zugriffsrechte für die Zugriffe steuerbar sind.

15. Automatisierungssystem (1) nach einem der Ansprüche 10 bis 14,
**dadurch gekennzeichnet, dass** wenigstens eine Zugriffschnittstelle (5, 7, 8) eine Ethernetschnittstelle (5) ist.

16. Automatisierungssystem (1) nach einem der Ansprüche 10 bis 15,
**dadurch gekennzeichnet, dass** wenigstens ein Automatisierungsgerät (2, 3) modular aus über einen Rückwandbus (4) verbundenen Komponenten (2.1, 2.2, 2.3) aufgebaut ist.

17. Automatisierungssystem (1) nach Anspruch 16,
**dadurch gekennzeichnet, dass** wenigstens eine Komponente (2.1, 2.2, 2.3) eine Prozessoreinheit ist, die eine Zugriffschnittstelle (5, 7, 8) aufweist.

18. Automatisierungssystem (1) nach Anspruch 17,
**dadurch gekennzeichnet, dass** die Prozessoreinheit ein Kommunikationsprozessor ist.

19. Automatisierungssystem (1) nach einem der Ansprüche 16 bis 18,
**dadurch gekennzeichnet, dass** das Automatisierungsgerät (2, 3) eine speicherprogrammierbare Steuerung oder Teil einer speicherprogrammierbaren Steuerung ist und die Komponenten (2.1, 2.2, 2.3) Baugruppen der speicherprogrammierbaren Steuerung sind.
